# EUROPEAN PATENT APPLICATION

(11) **EP 4 595 832 A1**
(43) Date of publication of application: **06.08.2025**
(21) Application number: 24178347.1
(22) Date of filing: 28.05.2024
(51) Int. Cl.: A47J 31/06

(54) **DRIPPER**

(30) Priority: 30.01.2024 JP 2024011797
(71) Applicant: HARIO Co., Ltd., Tokyo 103-0006 (JP)
(72) Inventor: YOSHIDA, Miki, Tokyo 103-0006 (JP); KURANAGA, Junichi, Tokyo 103-0006 (JP)
(74) Representative: Meissner Bolte Partnerschaft mbB

(57) **Abstract**

A dripper configured to drip a drink through a filter set in the dripper includes: a plurality of pillar members configured to support the filter in an up-and-down direction; and a holder including a drip outlet from which dripped drink flows out, and an attachment formed to surround the drip outlet and configured to detachably attach lower ends of the pillar members to the attachment at a predetermined interval. When the lower ends of the pillar members are attached to the attachment, the holder supports the pillar members such that upper ends of the pillar members are located above the drip outlet and are toward the outside in a radial direction. The plurality of pillar members are supported by the holder to form a filter accommodation space having a circular truncated cone shape whose diameter increases from a lower end to an upper end.

## Description

### BACKGROUND

### 1. Technical field

The present invention relates to a dripper, and specifically to a dripper configured to drip a drink such as coffee through a filter set in the dripper.

### 2. Related Art

Conventionally, there has been known a coffee dripper configured to drip coffee through a dedicated or an general-purpose filter set in a cylindrical body having a circular truncated cone shape. As an example, a plurality of ribs are provided on the inner wall surface of the coffee dripper having a circular truncated cone shape, which is disclosed in, for example, Japanese Registered Utility Model No. 3227141. In this coffee dripper, the ribs are provided to form a gap between the filter and the inner wall surface. By this means, the speed of dripping (flowing) coffee is stabilized to uniform the drip rate.

When this coffee dripper is used to drip coffee, a filter is set in the dripper, and ground coffee beans are put in the filter, and hot water is poured. By this means, coffee is dripped from the ground coffee beans, and passes through the filter, and then, part of the coffee flows through the gap between the filter and the inner wall surface of the coffee dripper, and into a coffee sever or a coffee cup disposed under the coffee dripper. In this case, the flow speed of the coffee is stabilized by the ribs, and therefore the dripping time depends on the time for pouring the hot water. That is, the user can adjust the time for dripping coffee by adjusting the time for pouring the hot water.

Incidentally, as the filter applicable to the above-described coffee dripper, there have been popular a variety of filters made of various materials such as nonwoven fabric, and cloth, as well as paper in recent years. In addition, for the paper filter, various materials, for example, wood pulp, and non-wood pulp made of one or more of cotton, bamboo and hemp have been used. The paper, the nonwoven fabric, and the cloth have different characteristics such as the hardness, the thickness, and the length and the density of a fiber depending on the materials. Therefore, the paper filter, the nonwoven filter, and the cloth filter have specific filtering properties and dripping properties, respectively. Accordingly, by using the filter having the filtering property and the dripping property according to the taste, it is possible to drip desired coffee.

However, in the case of the conventional coffee dripper described above, even though the ribs are provided, the filter adheres to the inner wall surface depending on the material of the filter, and therefore the gap is not fully formed. In this case, a part of the filter adheres to the inner wall surface, and the gap is formed between the remaining part and the inner wall surface, and therefore the dripped coffee does not uniformly flow through the filter. As a result, the speed of dripping (flowing) the coffee is not stabilized, and this makes it difficult to adjust the dripping time.

Therefore, even though the user uses the filter having the filtering property and the dripping property according to the taste, it is not possible to take full advantage of the properties specific to the filter. As a result, it may not be possible to drip user's favorite coffee. Here, although the example of dripping coffee has been described, the same applies to when other drinks such as black tea and green tea are dripped. In addition, when the conventional coffee dripper is not in use, a space is required in a storage location to store the cylindrical body having a circular truncated cone shape.

### SUMMARY

To address the above-described problems, it is therefore an object of the invention to easily drip a desired drink suiting the user's taste by taking full advantage of the properties specific to the filter, and to save the storage space when the coffee dripper is not in use.

To solve the above-described problems, an aspect of the present invention provides a dripper including: a plurality of pillar members configured to support the filter in an up-and-down direction; and a holder including a drip outlet from which dripped drink flows out, and an attachment formed to surround the drip outlet and configured to detachably attach lower ends of the pillar members to the attachment at a predetermined interval. When the lower ends of the pillar members are attached to the attachment, the holder supports the pillar members such that upper ends of the pillar members are located above the drip outlet and are toward the outside in a radial direction. The plurality of pillar members are supported by the holder to form a filter accommodation space having a circular truncated cone shape whose diameter increases from a lower end to an upper end.

According to the dripper having the above-described features, it is possible to easily drip a desired drink suiting the user's taste by taking full advantage of the properties specific to the filter, and to save the storage space when the coffee dripper is not in use.

### BRIEF DESCRIPTION OF THE DRAWINGS

Fig. 1 is a perspective view schematically illustrating a dripper according to Embodiment 1 of the invention;
Fig. 2 is a side view schematically illustrating the dripper according to Embodiment 1 of the invention;
Fig. 3 is a perspective view illustrating a pillar member and a support ring of the dripper according to Embodiment 1 of the invention;
Fig. 4 is a top view schematically illustrating the dripper according to Embodiment 1 of the invention;
Fig. 5 is a perspective view illustrating a dripper holder configured to support the dripper according to Embodiment 1 of the invention;
Fig. 6 is a perspective view illustrating an example of a case where the dripper according to Embodiment 1 of the invention is attached to the dripper holder;
Fig. 7 is a perspective view schematically illustrating a dripper according to Embodiment 2 of the invention;
Fig. 8 is a side view schematically illustrating the dripper according to Embodiment 2 of the invention;
Fig. 9 is a perspective view illustrating a pillar member and the support ring of the dripper according to Embodiment 2 of the invention;
Fig. 10 is a top view schematically illustrating the dripper according to Embodiment 2 of the invention;
Fig. 11 is a perspective view illustrating an example of a case where the dripper according to Embodiment 2 of the invention is attached to the dripper holder;
Fig. 12 is a perspective view schematically illustrating a dripper according to Embodiment 3 of the invention;
Fig. 13 is a side view schematically illustrating the dripper according to Embodiment 3 of the invention;
Fig. 14 is a perspective view illustrating a pillar member and the support ring of the dripper according to Embodiment 3 of the invention;
Fig. 15 is a top view schematically illustrating the dripper according to Embodiment 3 of the invention; and
Fig. 16 is a perspective view illustrating an example of a case where the dripper according to Embodiment 3 of the invention is attached to the dripper holder.

### DETAILED DESCRIPTION

Hereinafter, an embodiment of the present invention will be described with reference to the drawings. The same reference numbers in the different drawings indicate the same functional parts, and therefore repeated description for each of the drawings is omitted.

Each of drippers according to Embodiment 1 to Embodiment 3 is used to drip a drink such as coffee through a filter (not illustrated) set in the dripper.

### <Embodiment 1>

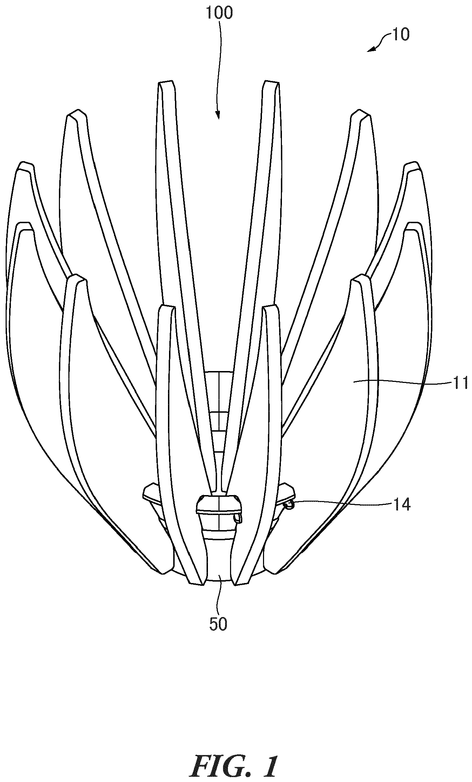

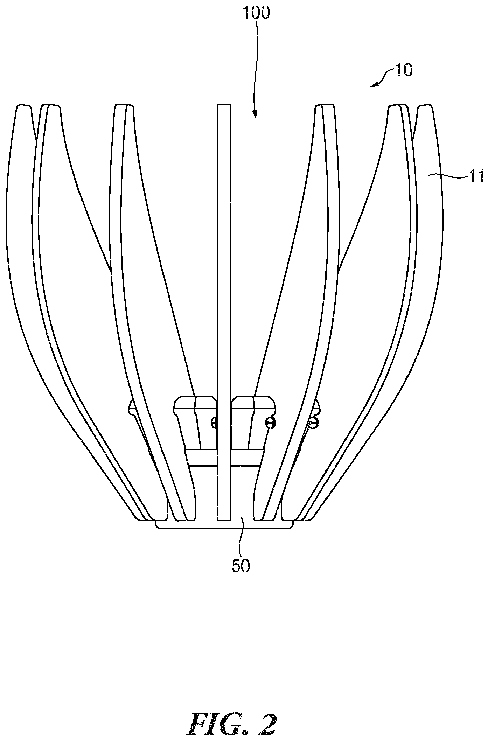

As illustrated in Fig. 1 and Fig. 2, a dripper 10 according to Embodiment 1 of the invention includes a plurality of pillar members 11 configured to support a filter in the up-and-down direction, and a holder 50 configured to support the pillar members 11.

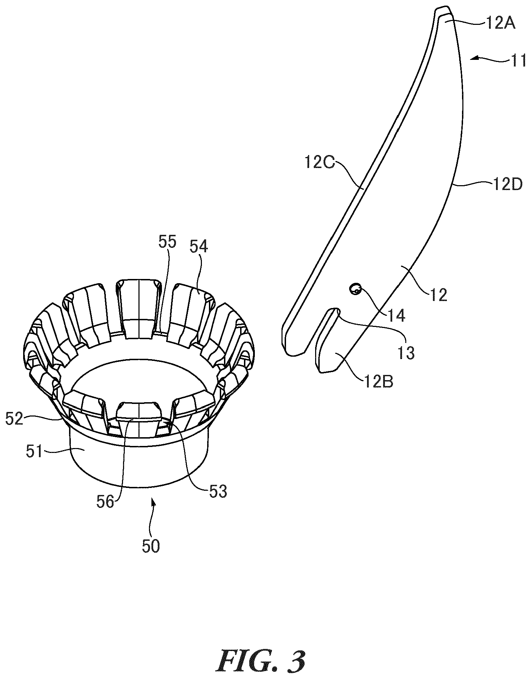

As illustrated in Fig. 3, the pillar member 11 includes a main body 12 as a plate member which is long in the up-and-down direction, and a slit 13 formed in a lower end 12B of the main body 12 along the longitudinal direction. The main body 12 is tapered such that the width of an upper end 12A is smaller than the width of the lower end 12B. A first side part 12C which is one side of the pillar member 11 in the longitudinal direction is slightly curved so that the upper end 12A bends outward in the width direction of the main body 12. Meanwhile, the center of a second side part 12D in the longitudinal direction of the main body 12 slightly swells outward in the width direction.

The slit 13 is provided in approximately the center in the width direction of the lower end 12B along the longitudinal direction of the main body 22. The slit 13 has a length and a width to engage with a holder slit 55 of a holder 50 described later. A protrusion 14 is provided near the upper end of the slit 13, that is, in a position below the center of the main body 12 in the longitudinal direction.

The holder 50 includes a base 51 having an annular shape, and a support ring 52 provided to continue to the base 51 and having a circular truncated cone shape whose diameter increases in the direction opposite to the base 51. The holder 50 also includes a drip outlet 53 from which the dripped drink flows out, which is open inside the annular base 51. An attachment 54 is formed on formed on the periphery of the support ring 52 opposite to the base 51. The lower ends of the pillar members 11 are detachably attached to the attachment 54.

The attachment 54 includes a plurality of holder slits 55 provided on the periphery of the support ring 52 and spaced at a predetermined interval in the circumferential direction. Each of the holder slits 55 is formed from the periphery of the support ring 52 to the base 51, and has a length and width to engage with the slit 13 of the pillar member 11. With the present embodiment, twelve holder slits 55 are equally spaced on the periphery of the support ring 52, as illustrated in Fig. 1 to Fig. 4. In addition, an engaging protrusion 56 protruding outward is provided on the periphery of the support ring 52, that is, the rim of the attachment 54.

The pillar members 11 configured as described above are detachably attached to the holder 50. The pillar members 11 attached to the holder 50 form a filter accommodation space 100. A desired filter is set in the filter accommodation space 100 formed in this way, and therefore it is possible to use the dripper 10 to drip a drink.

The pillar member 11 is attached to the holder 50 such that the first side part 12C is located inside the holder 50, and the second side part 12D is located outside the holder 50. The pillar member 11 is inserted into the holder slit 55 to engage the slit 13 with the holder slit 55 up to the point where the protrusion 14 contacts a portion of the outer circumference of the holder 50 below the engaging protrusion 56. By this means, the slit 13 of the pillar member 11 engages with the holder slit 55 of the holder 50, and therefore the pillar member 11 is supported such that the upper end 12A is located above the drip outlet 53 and is toward the outside in the radial direction. In this case, the protrusion 14 contacts the outer wall surface of the holder 50 under the engaging protrusion 56, and therefore it is possible to securely attach the pilar member 11 to the holder 50 and prevent the pilar member 11 from being removed from the holder 50.

When the pillar members 11 are attached to all of the twelve holder slits 55 of the holder 50, the twelve pillar members 11 form a frame having a circular truncated cone shape whose diameter increases upward from the holder 50. That is, the plurality of pillar members 11 are supported by the holder 50 to form the filter accommodation space 100 having a circular truncated cone shape whose diameter increases from the lower end to the upper end.

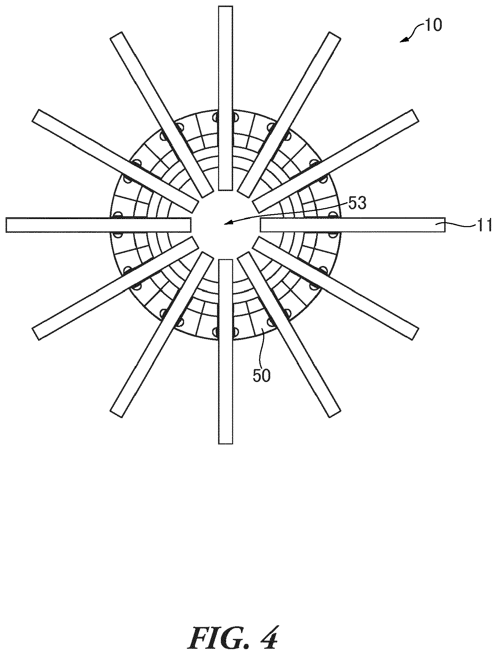

With the present embodiment, the main body 12 of the pillar member 11 is a plate member which is long in the up-and-down direction. The main body 12 is attached to the holder 50 such that the first side part 12C is located inside the holder 50. Therefore, when a filter is set in the filter accommodation space 100, the filter is supported in the up-and-down direction by the first side parts 12C of the plurality of pillar members 11 radially arranged as illustrated in Fig. 4. In addition, the first side parts 12C of the pillar members 11 are located inside the holder 50, and therefore the upper ends 12A of the main bodies 12 bend to the inside of the filter accommodation space 100. By this means, when the filter is set in the filter accommodation space 100, it is possible to prevent the upper end of the filter from bending outward.

When a drink such as coffee is dripped by using the dripper 10 according to the present embodiment, a desired filter is set in the filter accommodation space 100 formed by the pillar members 11, ground coffee beans are put in the filter, and hot water is poured. By this means, coffee is dripped from the grounded coffee beans in the filter.

The dripper 10 supports the filter only by the first side parts 12C of the twelve pillar members 12, and does not have any inner circumferential wall contacting the filter in the filter accommodation space 100. Therefore, when the hot water is poured, it is smoothly drained from the dripper 10 well. Consequently, the hot water does not remain too much in the filter, and flows through the filter to the lower end of the filter. Then, the coffee dripped in the filter exits from the lower end of the filter, and flows through the drip outlet 53 and into a server or a cup disposed under the dripper 10 at a stable speed (for a stable dripping time).

In this way, the dripper 10 according to the present embodiment can stably drip coffee for a dripping time depending on the amount or the speed of pouring the hot water. Therefore, for example, when the user likes a strong taste and therefore needs to lengthen the dripping time, the amount and the speed of pouring the hot water is adjusted by intermittently pouring the hot water into the dripper 10 little by little. On the other hand, when the user likes a light taste and therefore needs to shorten the dripping time, the amount and the speed of pouring the hot water is adjusted by continuously pouring the hot water into the dripper 10. In this way, it is possible to easily control the dripping time according to the user's taste by adjusting the amount and the speed of pouring the hot water.

In addition, the dripper 10 supports a filter only by the pillar members 11, and therefore it is possible to take full advantage of the filtering property and the dripping property specific to the filter set in the dripper 10. Consequently, the user can drip a drink suiting the taste by taking advantage of the properties specific to the filter selected according to the taste, and controlling the dripping time.

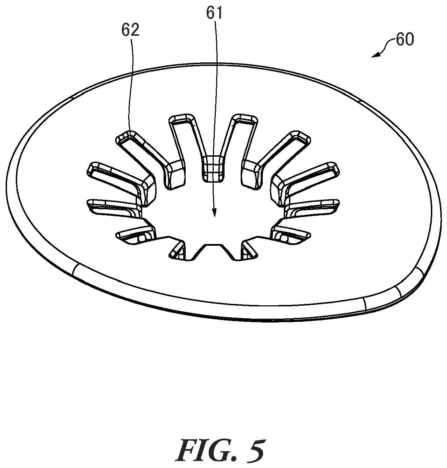

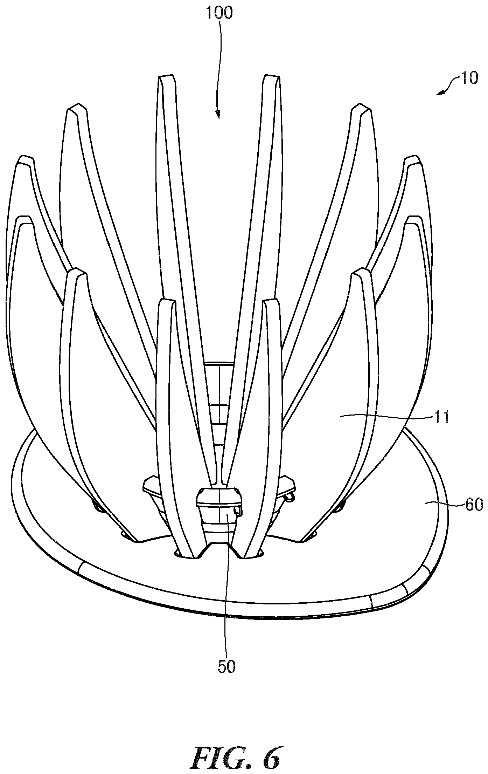

Fig. 5 illustrates one example of a dripper holder 60 to which the dripper 10 configured as described above is mounted. The dripper holder 60 includes a holder insertion slot 61 having a diameter that allows the base 51 of the holder 50 to be inserted, and a plurality of concave parts 62 arranged around the holder insertion slot 61. The plurality of concave parts 62 are provided to correspond to the holder slits 55 of the holder 50. The pillar members 11 attached to the holder slits 55 are inserted into the plurality of concave parts 62. Fig. 6 illustrates a state where the dripper 10 is mounted to the dripper holder 60.

The dripper 10 is placed on a server or a cup (not illustrated) and used. In this case, by mounting the dripper 10 to the dripper holder 60, the dripper 10 can be more stably placed on a server or a cup.

### <Embodiment 2>

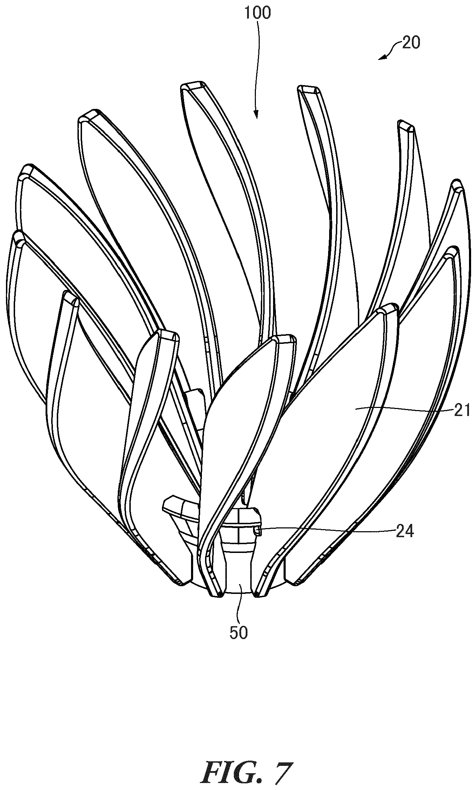

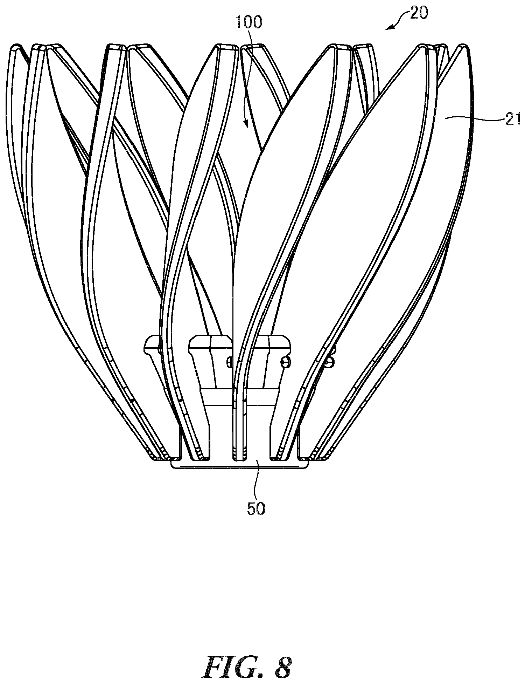

As illustrated in Fig. 7 and Fig. 8, a dripper 20 according to Embodiment 2 of the invention includes a plurality of pillar members 21 configured to support a filter in the up-and-down direction, and the holder 50 configured to support the pillar members 21. The holder 50 has the same shape and the same function as the holder 50 according to Embodiment 1 described above, and therefore is not described here.

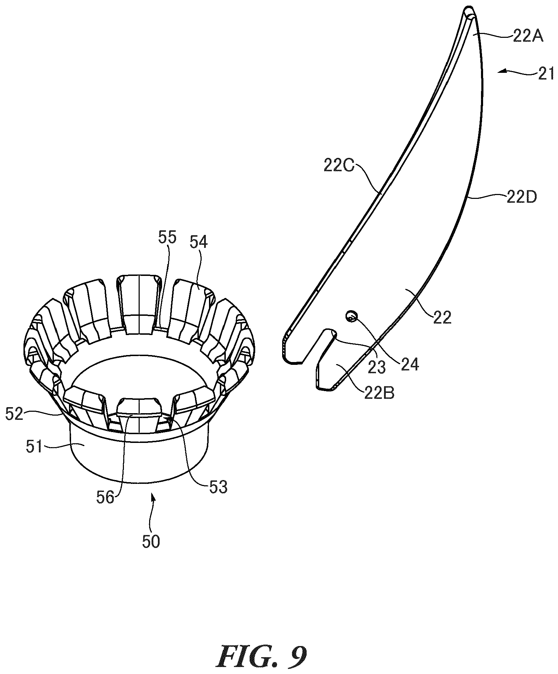

As illustrated in Fig. 9, the pillar member 21 includes a main body 22 as a plate member which is long in the up-and-down direction, and a slit 23 formed in a lower end 22B of the main body 22 along the longitudinal direction. The main body 22 is twisted or curved in the longitudinal direction. That is, the pillar member 21 is different in shape from the pillar member 11 according to Embodiment 1 in that it is twisted or curved in the longitudinal direction.

The pillar member 21A is tapered such that the width of an upper end 22A is smaller than the width of the lower end 22B. A first side part 22C of the pillar member 21 is a curved surface in which the upper end 22A slightly bends outward, and a second side part 22D is a curved surface in which the center in the longitudinal direction slightly swells outward.

The slit 23 is provided in approximately the center in the width direction of the lower end 22B along the longitudinal direction of the main body 22. The slit 23 has a length and a width to engage with the holder slit 55. A protrusion 24 is provided near the upper end of the slit 23, that is, in a position below the center of the main body 22 in the longitudinal direction. Here, the protrusion(s) 24 may be provided on one surface or both surfaces of the main body 22.

The pillar members 21 configured as described above are detachably attached to the holder 50. The pillar members 21 are attached to the holder 50 to form the filter accommodation space 100. A desired filter is set in the filter accommodation space 100 formed in this way, and therefore it is possible to use the dripper 20 to drip a drink.

The pillar member 21 is attached to the holder 50 such that the first side part 22C is located inside the holder 50, and the second side part 22D is located outside the holder 50. The pillar member 21 is inserted into the holder slit 55 to engage the slit 23 with the holder slit 55 up to the point where the protrusion 24 contacts a portion of the outer circumference of the holder 50 below the engaging protrusion 56.

When the pillar members 21 are attached to all of the twelve holder slits 55 of the holder 50, the twelve pillar members 21 form a frame having a circular truncated cone shape whose diameter increases upward from the holder 50. That is, the plurality of pillar members 21 are supported by the holder 50 to form the filter accommodation space 100 having a circular truncated cone shape whose diameter increases from the lower end to the upper end.

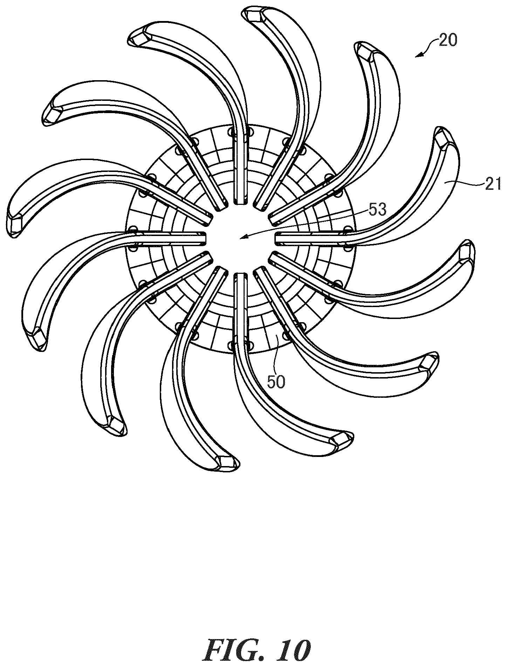

With the present embodiment, the main body 22 of the pillar member 21 as a plate member is long in the up-and-down direction and twisted or curved in the longitudinal direction. The main body 22 is attached to the holder 50 such that the first side part 22C is located inside the holder 50. Therefore, when a filter is set in the filter accommodation space 100, the filter is supported in the up-and-down direction by the first side parts 22C of the plurality of pillar members 21 arranged in spirals as illustrated in Fig. 10. In addition, the first side parts 22C of the pillar members 21 are located inside the holder 50, and therefore the upper ends 22A bend inward in the upper part of the filter accommodation space 100 to prevent the upper end of the filter from bending outward.

By using the dripper 20 according to the present embodiment, a drink such as coffee is dripped in the same procedure as the dripper 10 according to Embodiment 1. That is, a desired filter is set in the filter accommodation space 100 formed by the pillar members 21, ground coffee beans are put in the filter, and hot water is poured. By this means, coffee is dripped from the grounded coffee beans in the filter.

The dripper 20 supports the filter only by the first side parts 22C of the twelve pillar members 12, and does not have any inner circumferential wall contacting the filter in the filter accommodation space 100. Therefore, when the hot water is poured, it is smoothly drained from the dripper 20 well. Consequently, the hot water does not remain too much in the filter, and flows through the filter to the lower end of the filter. Then, the coffee dripped in the filter exits from the lower end of the filter, and flows through the drip outlet 53 and into a server or a cup disposed under the dripper 20 at a stable speed (for a stable dripping time).

In this way, the dripper 20 according to the present embodiment can stably drip coffee for a dripping time depending on the amount or the speed of pouring the hot water. Accordingly, for example, the hot water is intermittently poured into the dripper 20 little by little to lengthen the dripping time, and, on the other hand, the hot water is continuously poured into the dripper 20 to shorten the dripping time. By this means, it is possible to easily control the dripping time according to the user's taste.

In addition, the dripper 20 supports a filter only by the pillar members 21, and therefore it is possible to take full advantage of the filtering property and the dripping property specific to the filter set in the dripper 20. Consequently, the user can drip a drink suiting the taste by taking advantage of the properties specific to the filter selected according to the taste, and controlling the dripping time.

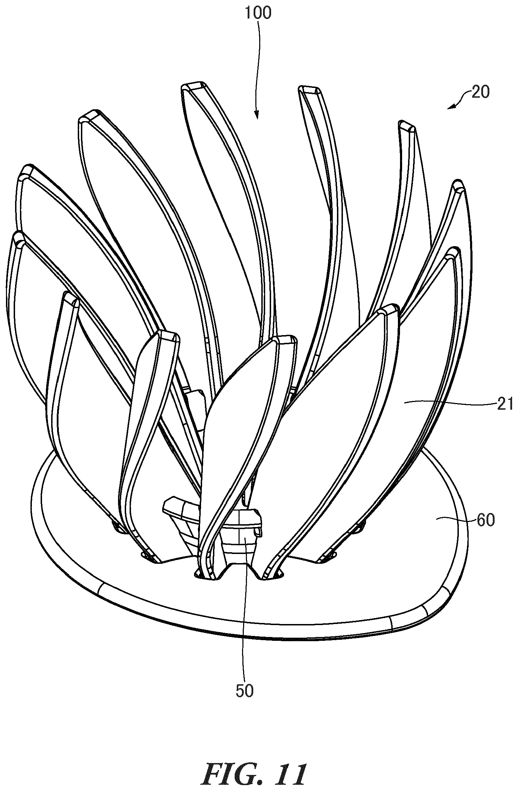

When a drink is dripped, the dripper 20 is mounted to the dripper holder 60 (Fig. 5), and therefore can be more stably placed on a server or a cup. Fig. 11 illustrates a state where the dripper 20 is mounted to the dripper holder 60.

### <Embodiment 3>

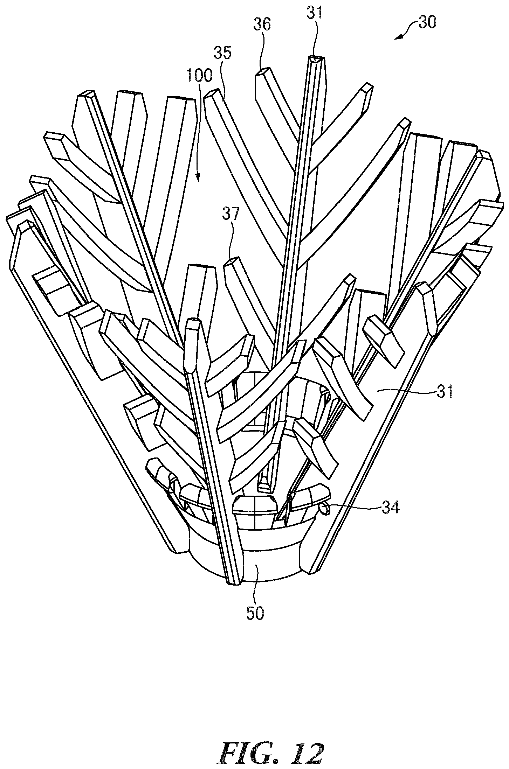

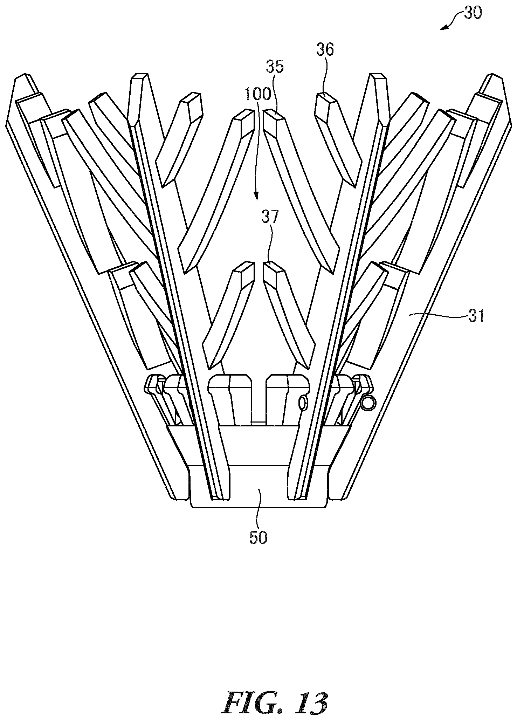

As illustrated in Fig. 12 and Fig. 13, a dripper 30 according to Embodiment 3 includes a plurality of pillar members 31 configured to support a filter in the up-and-down direction, and the holder 50 configured to support the pillar members 31. The holder 50 has the same shape and the same function as the holder 50 according to Embodiment 1 and Embodiment 2 described above, and therefore is not described here.

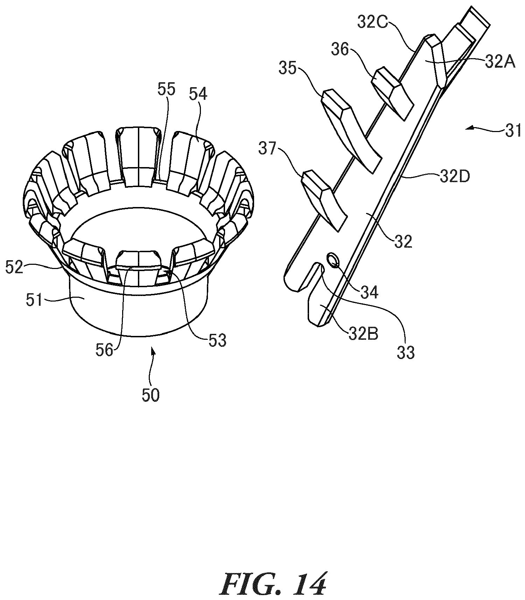

As illustrated in Fig. 14, the pillar member 31 includes a main body 32 as a plate member which is long in the up-and-down direction, and a slit 33 formed in a lower end 32B of the main body 32 along the longitudinal direction.

An upper end 32A of the pillar member 31 is inclined on a second side part 32D side. The pillar member 31 is tapered such that the width of the upper end 32A is smaller than that of the lower end 32B. The main body 32 includes branches 35, 36, and 37 which protrude from each of the front and rear surfaces of the main body 32.

The branch 35 is provided on each of the front and rear surfaces of the main body 32 at approximately the center in the longitudinal direction. The branch 35 is configured to support a part of the filter from the center to the upper end in the longitudinal direction, in the filter accommodation space 100 formed by the pillar members 31. The branch 36 is provided above the branch 35 on each of the front and rear surfaces of the main body 32, and configured to support the upper end of the filter in the filter accommodation space 100. The branch 37 is provided below the branch 35 on each of the front and rear surfaces of the main body 32, and configured to support the lower end of the filter in the filter accommodation space 100.

The slit 33 is provided in approximately the center in the width direction of the lower end 22B along the longitudinal direction of the main body 32. The slit 33 has a length and a width to engage with the holder slit 55. A protrusion 34 is provided near the upper end of the slit 33, that is, in a position below the center of the main body 32 in the longitudinal direction. Here, the protrusion(s) 34 may be provided on one surface or both surfaces of the main body 22.

The pillar members 31 configured as described above are detachably attached to the holder 50. The pillar members 31 are attached to the holder 50 to form the filter accommodation space 100. A desired filter is set in the filter accommodation space 100 formed in this way, and therefore it is possible to use the dripper 30 to drip a drink.

The pillar member 31 is attached to the holder 50 such that a first side part 32C is located inside the holder 50, and the second side part 32D is located outside the holder 50. The pillar member 31 is inserted into the holder slit 55 to engage the slit 33 with the holder slit 55 up to the point where the protrusion 34 contacts a portion of the outer circumference of the holder 50 below the engaging protrusion 56.

The pillar member 31 according to the present embodiment includes the branches 35, 36, and 37, and therefore has a size greater than the pillar members 11 and 21. Accordingly, although the holder 50 includes the twelve holder slits 55, the pillar members 31 are attached to six holder slits 55 which are every other holder slits of the twelve holder slits 55. When the six pillar members 31 are attached to the six holder slits 55, they form a frame having a circular truncated cone shape whose diameter increases upward from the holder 50. That is, the plurality of pillar members 31 are supported by the holder 50 to form the filter accommodation space 100 having a circular truncated cone shape whose diameter increases from the lower end to the upper end.

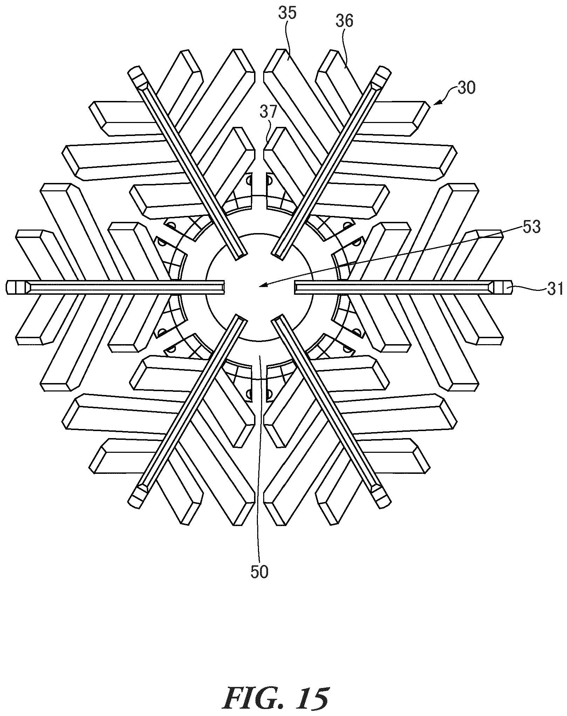

With the present embodiment, the pillar member 31 is attached to the holder 50 such that the first side part 32C is located inside the holder 50. The branches 35, 36, and 37 are provided on the pillar member 31, and therefore also the side parts of the branches 35, 36, and 37 are located inside the holder 50. Therefore, when a filter is set in the filter accommodation space 100, the filter is supported in the up-and-down direction by the first side parts 32C and the branches 35, 36 and 37 of the plurality of pillar members 31 arranged to form a hexagon like a snow crystal as illustrated in Fig. 15.

By using the dripper 30 according to the present embodiment, a drink such as coffee is dripped in the same procedure as the dripper 10 according to Embodiment 1, and the dripper 20 according to Embodiment 2. That is, a desired filter is set in the filter accommodation space 100 formed by the pillar members 31, ground coffee beans are put in the filter, and hot water is poured. By this means, coffee is dripped from the grounded coffee beans in the filter.

The dripper 30 supports the filter only by the first side parts 32C and the branches 35, 36, and 37 of the six pillar members 31, and does not have any inner circumferential wall contacting the filter in the filter accommodation space 100. By this means, when the hot water is poured, it is smoothly drained from the dripper 30 well. Consequently, the hot water does not remain too much in the filter, and flows through the filter to the lower end of the filter. Then, the coffee dripped in the filter exits from the lower end of the filter, and flows through the drip outlet 53 and into a server or a cup disposed under the dripper 30 at a stable speed (for a stable dripping time).

In this way, the dripper 30 according to the present embodiment can stably drip coffee for a dripping time depending on the amount or the speed of pouring the hot water. Accordingly, for example, the hot water is intermittently poured into the dripper 30 little by little to lengthen the dripping time, and, on the other hand, the hot water is continuously poured into the dripper 30 to shorten the dripping time. By this means, it is possible to easily control the dripping time according to the user's taste.

In addition, the dripper 30 supports a filter only by the pillar members 31, and therefore it is possible to take full advantage of the filtering property and the dripping property specific to the filter set in the dripper 30. Consequently, the user can drip a drink suiting the taste by taking advantage of the properties specific to the filter selected according to the taste, and controlling the dripping time.

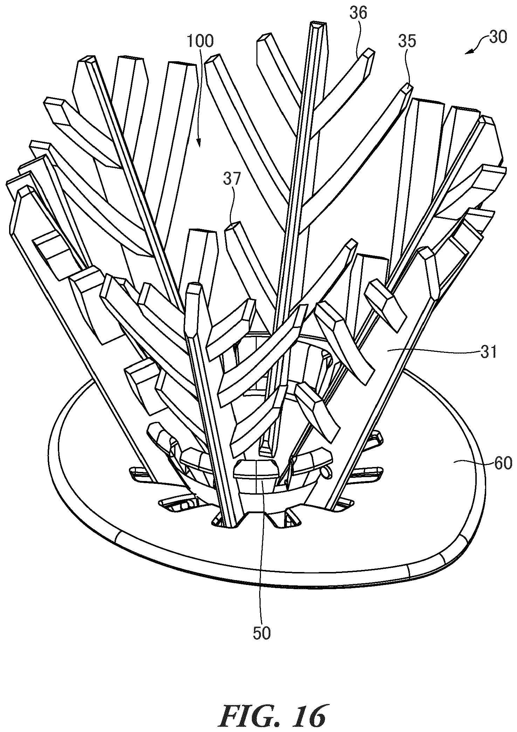

When a drink is dripped, the dripper 30 is mounted to the dripper holder 60 (Fig. 5), and therefore can be more stably placed on a server or a cup. Fig. 16 illustrates a state where the dripper 30 is mounted to the dripper holder 60.

According to the drippers 10, 20, and 30 of the above-described embodiments, the pillar members 11, 21, and 31 are detachably attached to the holder 50, and the pillar members 11, 21, and 31 are attached to the holder 50 to form the accommodation space 100. By this means, it is possible to function as the drippers 10, 20, and 30. In addition, when the drippers 10, 20, and 30 are not in use, the pillar members 11, 21, and 31 are detached from the holder 50, and therefore the drippers 10, 20, and 30 can be stored compactly. Consequently, it is possible to save the space in the storage location.

The pillar members 11, 21 and 31, and the holder 50 may be made of synthetic resin having heat resistance. Examples of the synthetic resin having heat resistance may include acrylonitrile styrene (AS) resin, polycarbonate resin, poly ethylene terephthalate (PET) resin, and polypropylene (PP) resin. In addition, the pillar members 11, 21 and 31, and the holder 50 may be colored in desired colors, and be transparent or translucent.

With Embodiment 1 and Embodiment 2 described above, the main body 12, 21 of the pillar member 11, 21 is tapered toward the upper end 12A, 22A to have a shape like, for example, a feather and a petal. In this case, the pillar members 11, 21 are attached to the holder 50, and therefore the whole dripper 10, 20 has a shape like a flower.

Moreover, with Embodiment 3, the pillar members 31 including the branches 35, 36, and 37 are attached to the holder 50, and therefore the whole dripper 30 has a shape like a snow crystal in a top view. In this way, the drippers 10, 20, and 30 can not only drip coffee suiting the user's taste, but also have excellent designs, and therefore the user can select the dripper whose appearance suits the taste.

As described above, the dripper 10, 20 includes the twelve pillar members 11, 21, and the dripper 30 includes the six pillar members 31. However, the number of the pillar members 11, 21, 31 may be appropriately changed, as long as the filter accommodation space 100 is formed. In addition, the user may appropriately select the colors of the pillar members 11, 21, and 31. That is, it is possible to customize the appearance of the dripper 10, 20, 30 according to the user's taste.

Here, the shapes of the pillar members 11, 21 and 31 are not limited to the above-described examples, as long as the pillar members 11, 21, and 31 are attached to the holder 50 to form the accommodation space 100 and therefore can support the filter in the up-and-down direction. Accordingly, the pillar member may be a plate member having a strip shape, or a rod-like member.

The drippers 10, 20, and 30 according to the above-described embodiments support the filter only by the pillar members 11, 21, and 31, and do not have any inner wall surface contacting the filter in the filter accommodation space 100. By this means, the filter always has a uniform air permeability, and therefore the hot water is smoothly drained well.

Therefore, according to the drippers 10, 20, and 30, it is possible to take full advantage of the filtering property and the dripping property specific to the filter set in the dripper. In addition, it is possible to easily control the time for dripping a drink according to the taste by appropriately controlling the way and the time for pouring the hot water. That is, the user appropriately selects the filter having the properties according to the taste and controls the dripping time, and therefore can easily drip the drink suiting the taste.

As described above, according to the drippers of the embodiments, it is possible to take full advantage of the properties specific to the filter, and easily drip the desired drink suiting the user's taste. Moreover, when the dripper is not in use, it is possible to save the storage space.

The embodiments of the present invention have been described in detail with reference to the drawings. However, the specific configuration is not limited to the embodiments, and the design can be changed without departing from the scope of the present invention. In addition, the above-described embodiments can be combined by utilizing each other's technology as long as there is no particular contradiction or problem in the purpose and configuration.

### List of reference signs

10, 20, 30: dripper, 11, 21, 31: pillar member,
12, 22, 32: main body,
12B, 22B, 32B: lower end, 12A, 22A, 32A: upper end,
12C, 22C, 32C: first side part,
12D, 22D, 32D: second side part,
13, 23, 33: slit, 14, 24, 34: protrusion,
35, 36, 37: branch,
50: holder, 51: base, 52: support ring,
53: drip outlet, 54: attachment,
55: holder slit, 60: dripper holder,
61: holder insertion slot, 62: concave part,
100: filter accommodation space

## Claims

1. A dripper configured to drip a drink through a filter set in the dripper, comprising:
a plurality of pillar members configured to support the filter in an up-and-down direction; and
a holder including:
a drip outlet from which dripped drink flows out; and
an attachment formed to surround the drip outlet and configured to detachably attach lower ends of the pillar members to the attachment at a predetermined interval, wherein:
when the lower ends of the pillar members are attached to the attachment, the holder supports the pillar members such that upper ends of the pillar members are located above the drip outlet and are toward the outside in a radial direction; and
the plurality of pillar members are supported by the holder to form a filter accommodation space having a circular truncated cone shape whose diameter increases from a lower end to an upper end.

2. The dripper according to claim 1, wherein:
each of the pillar members includes a main body as a plate member which is long in the up-and-down direction, and a slit provided in a lower end of the main body along a longitudinal direction;
the holder includes a base having an annular shape and forming the drip outlet, and a support ring provided to continue to the base and having a circular truncated cone shape whose diameter increases in a direction opposite to the base;
the attachment is formed on a periphery of the support ring opposite to the base;
the attachment includes a plurality of holder slits provided on a periphery of the support ring at a predetermined interval in a circumferential direction; and
the slits are inserted into the holder slits to engage with the holder slits, so that the pillar members are supported by the holder.

3. The dripper according to either claim 1 or claim 2, wherein in the filter accommodation space formed by the plurality of pillar members supported by the holder, the filter set in the filter accommodation space is supported in the up-and-down direction by side parts of the plurality of pillar members radially arranged.

4. The dripper according to either claim 1 or claim 2, wherein:
each of the plurality of pillar members is twisted or curved in the longitudinal direction.

5. The dripper according to claim 4, wherein
in the filter accommodation space formed by the plurality of pillar members supported by the holder, the filter set in the filter accommodation space is supported in the up-and-down direction by side parts of the plurality of pillar members arranged in spiral.

6. The dripper according to any one of claims 1to 5, wherein:
each of the plurality of pillar members includes branches protruding from the main body.

7. The dripper according to claim 6, wherein in the filter accommodation space formed by the plurality of pillar members supported by the holder, the filter set in the filter accommodation space is supported in the up-and-down direction by side parts and the branches of the plurality of pillar members arranged to form a hexagon.

8. The dripper according to claim 7, wherein the filter set is arranged like a snow crystal.
